# EUROPÄISCHE PATENTSCHRIFT

(11) **EP 1 572 787 B1**
(45) Veröffentlichungstag und Bekanntmachung des Hinweises auf die Patenterteilung: **13.12.2006**
(21) Anmeldenummer: 03758010.7
(22) Anmeldetag: 18.10.2003
(51) Int. Cl.: C08J 7/04, C09K 3/18

(54) **WASSERSPREITENDE KUNSTSTOFFKÖRPER UND VERFAHREN ZU DESSEN HERSTELLUNG**
WATER-DISPERSING PLASTIC BODIES AND METHOD FOR THE PRODUCTION THEREOF
CORPS EN MATIERE PLASTIQUE PERMETTANT A L'EAU DE SE REPANDRE ET PROCEDE DE FABRICATION DESDITS CORPS

(30) Priorität: 17.12.2002 DE 10259238
(43) Veröffentlichungstag der Anmeldung: 14.09.2005
(73) Patentinhaber: Röhm GmbH, 64293 Darmstadt (DE)
(72) Erfinder: HASSKERL, Thomas, 61476 Kronberg (DE); NEEB, Rolf, 64319 Pfungstadt (DE); SEYOUM, Ghirmay, 63329 Egelsbach (DE); BECKER, Patrick, 64367 Mühltal (DE)
(86) Internationale Anmeldenummer: PCT/EP2003/011536
(87) Internationale Veröffentlichungsnummer: WO 2004/055102

(56) Entgegenhaltungen:
- EP-A- 0 149 182
- EP-A- 0 709 442
- WO-A-00/00297
- WO-A-95/32237

## Beschreibung

Die vorliegende Erfindung betrifft wasserspreitende Kunststoffkörper, die ein Kunststoffsubstrat, eine wasserspreitende, anorganische Beschichtung und eine haftvermittelnde, sich zwischen dem Kunststoffsubstrat und der anorganischen Beschichtung befindliche Zwischenschicht aufweisen.

Wasserspreitende Kunststoffe haben die Eigenschaft, dass sich Wasser, welches auf ihre Oberfläche gerät, dort nicht zu voneinander getrennten Tropfen zusammenzieht, sondern dass sich die Tropfen ausbreiten und bei Berührung zu einer geschlossenen Schicht zusammenfließen. Dadurch werden eine verbesserte Lichtreflexion an der mit Wasser befeuchteten Oberfläche und - bei durchsichtigen Kunststoffen - eine bessere Lichtdurchlässigkeit erreicht und das Abtropfen von Wasser von der Unterseite des Kunststoffkörpers erschwert.

Es sind zahlreiche Versuche unternommen worden, beschlagschützende Beschichtungen aus vernetzten hydrophilen Polymeren auf wasserabstoßenden Kunststoffoberflächen zu erzeugen.

Nach DE-OS 21 61 645 wird eine derartige Beschichtung aus einem Mischpolymerisat aus Alkylestern, Hydroxyalkylestern und quartären Aminoalkylestern der Acryl- oder Methacrylsäure und Methylolethern des Methacrylamids als Vernetzungsmittel erzeugt. Sie nehmen zunächst unter Quellurg Wasser auf und gehen dabei allmählich in einen wasserspreitenden Zustand über. Infolge der Quellung wird die Beschichtung jedoch weich und empfindlich gegen mechanische Beschädigungen.

Des weiteren sind wasserspreitende Körper aus EP-A-0 149 182 bekannt. Diese Kunststoffkörper weisen eine anorganische Beschichtung auf Basis von SiO₂ auf.

Nachteilig an den in EP-A-0 149 182 offenbarten wasserspreitenden Kunststoffkörpern ist jedoch, dass ein derartiger Kunststoffkörper beim thermischen Umformen seine wasserspreitende Eigenschaft vollkommen verliert, wobei die Beschichtung auf dem umgeformten Körper milchig trüb und unansehnlich wird.

In Anbetracht des hierin angegebenen und diskutierten Standes der Technik war es mithin Aufgabe der vorliegenden Erfindung wasserspreitende Kunststoffkörper anzugeben, die thermisch umgeformt werden können, ohne dass die wasserspreitende Eigenschaft hierdurch nachteilig beeinflusst wird oder eine Trübung auftritt.

Darüber hinaus war es mithin Aufgabe der vorliegenden Erfindung wasserspreitende Kunststoffkörper zur Verfügung zu stellen, deren wasserspreitende Beschichtung eine besonders hohe Haftung auf den Kunststoffsubstraten aufweist. Diese Eigenschaft sollte durch Feuchtigkeit nicht beeinträchtigt werden.

Eine weitere Aufgabe der Erfindung bestand darin, daß die Kunststoffkörper eine hohe Haltbarkeit, insbesondere eine hohe Beständigkeit gegen UV-Bestrahlung oder Bewitterung aufweisen.

Des weiteren lag der Erfindung die Aufgabe zugrunde, wasserspreitende Kunststoffkörper zur Verfügung zu stellen, die besonders einfach hergestellt werden können. So sollten zur Herstellung der Kunststoffkörper insbesondere Substrate verwendet werden können, die durch Extrusion, Spritzguss sowie durch Gussverfahren erhältlich sind.

Eine weitere Aufgabe der vorliegenden Erfindung bestand darin, wasserspreitende Kunststoffkörper anzugeben, die hervorragende mechanische Eigenschaften zeigen. Diese Eigenschaft ist insbesondere für Anwendungen wichtig, bei denen der Kunststoffkörper eine hohe Stabilität gegen Schlageinwirkung aufweisen soll.

Darüber hinaus sollten die Kunststoffkörper besonders gute optische Eigenschaften aufweisen.

Ein weiteres Ziel der vorliegenden Erfindung bestand darin, Kunststoffkörper bereitzustellen, die auf einfache Weise in Größe und Form den Anforderungen angepasst werden können.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Kunststoffkörper. Zweckmäßige Abwandlungen der erfindungsgemäßen Kunststoffkörper werden in den auf Anspruch 1 rückbezogenen Unteransprüchen unter Schutz gestellt.

Hinsichtlich Verfahren zur Herstellung liefert der Anspruch 24 eine Lösung der zugrunde liegenden Aufgabe.

Dadurch, dass die sich zwischen einem Kunststoffsubstrat und einer wasserspreitenden, anorganischen Beschichtung (a) befindliche, haftvermittelnde Zwischenschicht (b) zwei Polymere (A) und (B) umfasst, wobei Wasser auf einer Schicht des Polymeren (A) einen Randwinkel kleiner oder gleich 73° bei 20°C und Wasser auf einer Schicht des Polymeren (B) einen Randwinkel größer oder gleich 75° bei 20°C bildet, gelingt es wasserspreitende Kunststoffkörper zur Verfügung zu stellen, die thermisch umgeformt werden können, ohne dass die wasserspreitende Eigenschaft hierdurch nachteilig beeinflusst wird oder eine Trübung auftritt.

Durch die erfindungsgemäßen Maßnahmen werden u.a. insbesondere folgende Vorteile erzielt:
- Die wasserspreitenden Beschichtungen der erfindungsgemäßen Kunststoffkörper weisen eine besonders hohe Haftung auf den Kunststoffsubstraten auf, wobei diese Eigenschaft auch bei Einwirkung von Feuchtigkeit nicht beeinträchtigt wird.
- Die erfindungsgemäßen Kunststoffkörper zeigen eine hohe Beständigkeit gegen UV-Bestrahlung.
- Die erfindungsgemäßen Kunststoffkörper können kostengünstig hergestellt werden.
- Die Kunststoffkörper der vorliegenden Erfindung können auf bestimmte Erfordernisse angepasst werden. Insbesondere kann die Größe und die Form des Kunststoffkörpers in weiten Bereichen variiert werden, ohne dass hierdurch die Umformbarkeit beeinträchtigt wird. Des weiteren stellt die vorliegende Erfindung auch Kunststoffkörper mit hervorragenden optischen Eigenschaften zur Verfügung.
- Die Kunststoffkörper der vorliegenden Erfindung weisen gute mechanische Eigenschaften auf.

Die erfindungsgemäßen Kunststoffkörper sind durch Beschichtung von Kunststoffsubstraten erhältlich. Für die Zwecke der vorliegenden Erfindung geeignete Kunststoffsubstrat sind an sich bekannt. Derartige Substrate umfassen insbesondere Polycarbonate, Polystyrole, Polyester, beispielsweise Polyethylenterephthalat (PET), die auch mit Glykol modifiziert sein können, und Polybutylenterephthalat (PBT), cycloolefinische Polymere(COC) und/oder Poly(meth)acrylate. Bevorzugt sind hierbei Polycarbonate, cycloolefinische Polymere und Poly(meth)acrylate, wobei Poly(meth)acrylate besonders bevorzugt sind.

Polycarbonate sind in der Fachwelt bekannt. Polycarbonate können formal als Polyester aus Kohlensäure und aliphatischen oder aromatischen DihydroxyVerbindungen betrachtet werden. Sie sind leicht zugänglich durch Umsetzung von Diglykolen oder Bisphenolen mit Phosgen bzw. Kohlensäurediestern in Polykondensations- bzw. Umesterungsreaktionen.

Hierbei sind Polycarbonate bevorzugt, die sich von Bisphenolen ableiten. Zu diesen Bisphenolen gehören insbesondere 2,2-Bis-(4-hydroxyphenyl)-propan (Bisphenol A), 2,2-Bis-(4-hydroxyphenyl)-butan (Bisphenol B), 1,1-Bis(4-hydroxyphenyl)cyclohexan (Bisphenol C), 2,2'-Methylendiphenol (Bisphenol F), 2,2-Bis(3,5-dibrom-4-hydroxyphenyl)propan (Tetrabrombisphenol A) und 2,2-Bis(3,5-dimethyl-4-hydroxyphenyl)propan (Tetramethylbisphenol A).

Üblich werden derartige aromatische Polycarbonate durch Grenzflächenpolykondensation oder Umesterung hergestellt, wobei Einzelheiten in Encycl. Polym. Sci. Engng. 11, 648-718 dargestellt sind.

Bei der Grenzflächenpolykondensation werden die Bisphenole als wäßrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt. Als Katalysatoren gelangen Amine, bei sterisch gehinderten Bisphenolen auch Phasentransferkatalysatoren zum Einsatz. Die resultierenden Polymere sind in den verwendeten organischen Lösungsmitteln löslich.

Über die Wahl der Bisphenole können die Eigenschaften der Polymere breit variiert werden. Bei gleichzeitigem Einsatz unterschiedlicher Bisphenole lassen sich in Mehrstufen-Polykondensationen auch Block-Polymere aufbauen.

Cycloolefinische Polymere sind Polymere, die unter Verwendung von cyclischen Olefinen, insbesondere von polycyclischen Olefinen erhältlich sind.

Cyclische Olefine umfassen beispielsweise monocyclische Olefine, wie Cyclopenten, Cyclopentadien, Cyclohexen, Cyclohepten, Cycloocten sowie Alkylderivate dieser monocyclischen Olefine mit 1 bis 3 Kohlenstoffatomen, wie Methyl, Ethyl oder Propyl, wie beispielsweise Methylcyclohexen oder Dimethylcyclohexen, sowie Acrylat- und/oder Methacrylatderivate dieser monocyclischen Verbindungen. Darüber hinaus können auch Cycloalkane mit olefinischen Seitenketten als cyclische Olefine verwendet werden, wie beispielsweise Cyclopentylmethacrylat.

Bevorzugt sind verbrückte, polycyclische Olefinverbindungen. Diese polycyclischen Olefinverbindungen können die Doppelbindung sowohl im Ring aufweisen, es handelt sich hierbei um verbrückte polycyclische Cycloalkene, als auch in Seitenketten. Hierbei handelt es sich um Vinylderivate, Allyloxycarboxyderivate und (Meth)acryloxyderivate von polycyclischen Cycloalkanverbindungen. Diese Verbindungen können des weiteren Alkyl-, Aryl- oder Aralkylsubstituenten aufweisen.

Beispielhafte polycyclische Verbindungen sind, ohne daß hierdurch eine Einschränkung erfolgen soll, Bicyclo[2.2.1]hept-2-en (Norbornen), Bicyclo[2.2.1]hept-2,5-dien (2,5-Norbornadien), Ethyl-bicyclo[2.2.1]hept-2-en (Ethylnorbornen), Ethylidenbicyclo[2.2.1]hept-2-en (Ethyliden-2-norbornen), Phenylbicyclo[2.2.1]hept-2-en, Bicyclo[4.3.0]nona-3,8-dien, Tricyclo[4.3.0.1^{2,5}]-3-decen, Tricyclo[4.3.0.1^{2,5}]-3,8-decen-(3,8-dihydrodicyclopentadien), Tricyclo[4.4.0.1^{2,5}]-3-undecen, Tetracyclo[4.4.0.1^{2,5},1^{7,10}]-3-dodecen, Ethyliden-tetracyclo[4.4.0.1^{2,5}.1^{7,10}]-3-dodecen, Methyloxycarbonyltetracyclo[4.4.0.1^{2,5},1^{7,10}]-3-dodecen, Ethyliden-9-ethyltetracyclo[4.4.0.1^{2,5},1^{7,10}]-3-dodecen, Pentacyclo[4.7.0.1^{2,5},O,O^{3,13},1^{9,12}]-3-pentadecen, Pentacyclo[6.1.1^{3,6}.0^{2,7}.0^{9,13}]-4-pentadecen, Hexacyclo[6.6.1.1^{3,6}.1^{10,13}.0^{2,7}.0^{9,14}]-4-heptadecen, Dimethylhexacyclo[6.6.1.1^{3,6}.1^{10,13}.0^{2,7}.0^{9,14}]-4-heptadecen, Bis(allyloxycarboxy)tricyclo[4.3.0.1^{2,5}]-decan, Bis(methacryloxy)tricyclo[4.3.0.1^{2,5}]-decan, Bis(acryloxy)tricyclo[4.3.0.1^{2,5}]-decan.

Die cycloolefinischen Polymere werden unter Verwendung von zumindest einer der zuvor beschriebenen cycloolefinischen Verbindungen, insbesondere der polycyclischen Kohlenwasserstoffverbindungen hergestellt. Darüber hinaus können bei der Herstellung der cycloolefinischen Polymere weitere Olefine verwendet werden, die mit den zuvor genannten cycloolefinischen Monomeren copolymerisiert werden können. Hierzu gehören u.a. Ethylen, Propylen, Isopren, Butadien, Methylpenten, Styrol und Vinyltoluol.

Die meisten der zuvor genannten Olefine, insbesondere auch die Cycloolefine und Polycycloolefine, können kommerziell erhalten werden. Darüber hinaus sind viele cyclische und polycyclische Olefine durch Diels-Alder-Additionsreaktionen erhältlich.
Die Herstellung der cycloolefinischen Polymere kann auf bekannte Art und Weise erfolgen, wie dies u.a. in den japanischen Patentschriften 11818/1972, 43412/1983, 1442/1986 und 19761/1987 und den japanischen Offenlegungsschriften Nr. 75700/1975, 129434/1980, 127728/1983, 168708/1985, 271308/1986, 221118/1988 und 180976/1990 und in den Europäischen Patentanmeldungen EP-A-0 6 610 851, EP-A-0 6 485 893, EP-A-0 6 407 870 und EP-A-0 6 688 801 dargestellt ist.

Die cycloolefinischen Polymere können beispielsweise unter Verwendung von Aluminiumverbindungen, Vanadiumverbindungen, Wolframverbindungen oder Borverbindungen als Katalysator in einem Lösungsmittel polymerisiert werden.

Es wird angenommen, daß die Polymerisation je nach den Bedingungen, insbesondere dem eingesetzten Katalysator, unter Ringöffnung oder unter Öffnung der Doppelbindung erfolgen kann.

Darüber hinaus ist es möglich, cycloolefinische Polymere durch radikalische Polymerisation zu erhalten, wobei Licht oder ein Initiator als Radikalbildner verwendet wird. Dies gilt insbesondere für die Acryloylderivate der Cycloolefine und/oder Cycloalkane. Diese Art der Polymerisation kann sowohl in Lösung als auch in Substanz erfolgen.

Ein weiteres bevorzugtes Kunststoffsubstrat umfasst Poly(meth)acrylate. Diese Polymere werden im allgemeinen durch radikalische Polymerisation von Mischungen erhalten, die (Meth)acrylate enthalten. Der Ausdruck (Meth)acrylate umfasst Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat;
(Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat;
Aryl(meth)acrylate, wie Benzyl(meth)acrylat oder
Phenyl(meth)acrylat, wobei die Arylreste jeweils unsubstituiert oder bis zu vierfach substituiert sein können;
Cycloalkyl(meth)acrylate, wie 3-Vinylcyclohexyl(meth)acrylat,
Bornyl(meth)acrylat;
Hydroxylalkyl(meth)acrylate, wie
3-Hydroxypropyl(meth)acrylat,
3,4-Dihydroxybutyl(meth)acrylat,
2-Hydroxyethyl(meth)acrylat, 2-Hydroxypropyl(meth)acrylat;
Glycoldi(meth)acrylate, wie 1,4-Butandioldi(meth)acrylat,
(Meth)acrylate von Etheralkoholen, wie
Tetrahydrofurfuryl(meth)acrylat, Vinyloxyethoxyethyl(meth)acrylat;
Amide und Nitrile der (Meth)acrylsäure, wie
N-(3-Dimethylaminopropyl)(meth)acrylamid,
N-(Diethylphosphono)(meth)acrylamid,
1-Methacryloylamido-2-methyl-2-propanol;
schwefelhaltige Methacrylate, wie
Ethylsulfinylethyl(meth)acrylat,
4-Thiocyanatobutyl(meth)acrylat,
Ethylsulfonylethyl(meth)acrylat,
Thiocyanatomethyl(meth)acrylat,
Methylsulfinylmethyl(meth)acrylat,
Bis((meth)acryloyloxyethyl)sulfid;
mehrwertige (Meth)acrylate, wie
Trimethyloylpropantri(meth)acrylat,
Pentaerythrittetra(meth)acrylat und
Pentaerythrittri(meth)acrylat.

Gemäß einem bevorzugten Aspekt der vorliegenden Erfindung enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1 ;
Acrylnitril; Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Methylmaleinsäureanhydrid, Maleinimid, Methylmaleinimid; und
Diene, wie beispielsweise Divinylbenzol.

Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 3 Gew.-%, vorzugsweise von 0,05 bis 1 Gew.-%, bezogen auf das Gewicht der Monomeren, eingesetzt.

Die zuvor genannten Polymere können einzeln oder als Mischung verwendet werden. Hierbei können auch verschiedene Polycarbonate, Poly(meth)acrylate oder cycloolefinische Polymere eingesetzt werden, die sich beispielsweise im Molekulargewicht oder in der Monomerzusammensetzung unterscheiden.

Die erfindungsgemäßen Kunststoffsubstrate können beispielsweise aus Formmassen der zuvor genannten Polymere hergestellt werden. Hierbei werden im allgemeinen thermoplastische Formgebungsverfahren eingesetzt, wie Extrusion oder Spritzguss.

Das Gewichtsmittel des Molekulargewichts M_{W} der erfindungsgemäß als Formmasse zur Herstellung der Kunststoffsubstrate zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne dass hierdurch eine Einschränkung erfolgen soll. Diese Größe kann beispielsweise mittels Gel-Permeations-Chromatographie bestimmt werden.

Des weiteren können die Kunststoffsubstrate durch Gusskammerverfahren erzeugt werden. Hierbei werden beispielsweise geeignete (Meth)acrylmischungen in einer Form gegeben und polymerisiert. Derartige (Meth)acrylmischungen weisen im allgemeinen die zuvor dargelegten (Meth)acrylate, insbesondere Methylmethacrylat auf. Des weiteren können die (Meth)acrylmischungen die zuvor dargelegten Copolymere sowie, insbesondere zur Einstellung der Viskosität, Polymere, insbesondere Poly(meth)acrylate, enthalten.

Das Gewichtsmittel des Molekulargewichts M_{W} der Polymere, die durch Gusskammerverfahren hergestellt werden, ist im allgemeinen höher als das Molekulargewicht von Polymeren, die in Formmassen verwendet werden. Hierdurch ergeben sich eine Reihe bekannter Vorteile. Im allgemeinen liegt das Gewichtsmittel des Molekulargewichts von Polymeren, die durch Gusskammerverfahren hergestellt werden im Bereich von 500 000 bis 10 000 000 g/mol, ohne dass hierdurch eine Beschränkung erfolgen soll.

Bevorzugte Kunststoffsubstrate, die nach dem Gusskammerverfahren hergestellt wurden, können von Röhm GmbH & Co. KG kommerziell unter dem Handelsnamen ®Plexiglas GS erhalten werden.

Darüber hinaus können die zur Herstellungen der Kunststoffsubstrate zu verwendenden Formmassen sowie die Acrylharze übliche Zusatzstoffe aller Art enthalten. Hierzu gehören unter anderem Antistatika, Antioxidantien, Entformungsmittel, Flammschutzmittel, Schmiermittel, Farbstoffe, Fliessverbesserungsmittel, Füllstoffe, Lichtstabilisatoren und organische Phosphorverbindungen, wie Phosphite, Phosphorinane, Phospholane oder Phosphonate, Pigmente, Verwitterungsschutzmittel und Weichmacher. Die Menge an Zusatzstoffen ist jedoch auf den Anwendungszweck beschränkt.

Besonders bevorzugte Formmassen, die Poly(meth)acrylate umfassen, sind unter dem Handelsnamen PLEXIGLAS® von der Fa. Degussa AG kommerziell erhältlich. Bevorzugte Formmassen, die cycloolefinische Polymere umfassen, können unter dem Handelsnamen ®Topas von Ticona und ®Zeonex von Nippon Zeon bezogen werden. Polycarbonat-Formmassen sind beispielsweise unter dem Handelsnamen ®Makrolon von Bayer oder ®Lexan von General Electric erhältlich.

Besonders bevorzugt umfasst das Kunststoffsubstrat mindestens 80 Gew.-%, insbesondere mindestens 90 Gew.-%, bezogen auf das Gesamtgewicht des Substrats, Poly(meth)acrylate, Polycarbonate und/oder cycloolefinische Polymere. Besonders bevorzugt bestehen die Kunststoffsubstrate aus Polymethylmethacrylat, wobei das Polymethylmethacrylat übliche Additive enthalten kann.

Gemäß einer bevorzugten Ausführungsform können Kunststoffsubstrate eine Schlagzähigkeit gemäß ISO 179/1 von mindestens 10 kJ/m², bevorzugt mindestens 15 kJ/m² aufweisen.

Die Form sowie die Größe des Kunststoffsubstrats sind nicht wesentlich für die vorliegende Erfindung. Im allgemeinen werden häufig platten- oder tafelförmige Substrate eingesetzt, die eine Dicke im Bereich von 1 mm bis 200 mm, insbesondere 5 bis 30 mm aufweisen.

Bevor die Kunststoffsubstrate mit einer Beschichtung versehen werden, können diese durch geeignete Methoden aktiviert werden, um die Haftung zu verbessern. Hierzu kann beispielsweise das Kunststoffsubstrat mit einem chemischen und/oder physikalischen Verfahren behandelt werden, wobei das jeweilige Verfahren vom Kunststoffsubstrat abhängig ist.

Die Kunststoffkörper der vorliegenden Erfindung werden zunächst mit einer haftvermittelnden, sich zwischen dem Kunststoffsubstrat und der anorganischen Beschichtung befindlichen Zwischenschicht (b) versehen, die zwei Polymere (A) und (B) umfasst, wobei Wasser auf einer Schicht des Polymeren (A) einen Randwinkel kleiner oder gleich 73° bei 20°C und Wasser auf einer Schicht des Polymeren (B) einen Randwinkel größer oder gleich 75° bildet. Der Randwinkel wird bei 20°C mit einem Kontaktwinkelmesssystem G40 der Fa. Krüss, Hamburg bestimmt.

Die Schichtdicke zur Bestimmung des Randwinkels ist hierbei nicht wesentlich, wobei jedoch das Wasser lediglich mit einer Schicht aus dem Polymeren (A) bzw. dem Polymeren (B) in Kontakt steht. Im allgemeinen genügt eine Schichtdicke von 50 µm oder weniger. Um den Randwinkel korrekt zu bestimmen sollte die Schicht jedoch glatt sein. Die Werte gelten für eine im wesentlichen glatte Oberfläche. Die Herstellung einer derartigen Oberfläche ist dem Fachmann bekannt. Bei einer genügenden Schichtdicke stellt sich eine glatte Oberfläche bei Verwendung von Flutbeschichtungsverfahren von selbst ein.

Die wesentliche Eigenschaft der haftvermittelnden Schicht liegt darin, dass sie eine größere Haftfestigkeit sowohl zu der Kunststoffoberfläche als auch zu der wasserspreitenden Schicht besitzt als die letztere zu der Kunststoffoberfläche. Während es zahlreiche organische Polymerstoffe gibt, die an einer wasserabstoßenden Kunststoffoberfläche gut haften, bedarf es zu einer ausreichenden Haftung an der wasserspreitenden Schicht bestimmter Eigenschaften.

Diese Eigenschaften beruhen auf polare Gruppen aufweisende Polymere (A), die sich in der haftvermittelnden Schicht befinden, wobei die Polymere eine geringe Löslichkeit und geringe Quellbarkeit in Wasser zeigen. Die Polarität der Polymere (A) zeigt sich durch einen geringen Randwinkel, den Wasser auf einer Schicht bildet, die aus Polymeren (A) gebildet wird. Diese Schicht kann vernachlässigbar geringe Mengen an Additive oder Lösungsmittelresten enthalten, wobei diese Zusatzstoffe den Kontaktwinkel nicht beeinflussen dürfen. So zeigt eine Schicht des Polymeren (A) einen Randwinkel kleiner oder gleich 73° bei 20°C, vorzugsweise liegt der Randwinkel der Polymeren (A) im Bereich von 50° bis 72° und besonders bevorzugt im Bereich von 65° bis 71 °.

Die Art des Polymeren (A) ist nicht besonders beschränkt, falls die sich durch den Randwinkel, den Wasser auf einer Oberfläche aus Polymer (A) bildet, widerspiegelnde Polarität gegeben ist. Diese Polarität kann im allgemeinen durch polare Gruppen erzielt werden, die sowohl Bestandteil der Hauptkette und/oder von Seitenketten sein können.

So kann das Polymere (A) durch Polyadditions- oder Polykondensationsreaktionen erhalten werden. Hierzu gehören beispielsweise Polyether, Polyester, Polycarbonate, Polyurethane, Epoxidharze und Polyamide.

Eine weitere Gruppe von als Polymer (A) geeigneten Verbindungen sind Polyvinylverbindungen. Zu diesen gehören beispielsweise Polyolefine, wie Polypropylen, Polyethylen; Polyarylverbindungen, wie Polystyrol; Poly(meth)acrylate und Polyvinylacetate. Zur Herstellung dieser Polymere geeignete Vinylverbindungen wurden zuvor dargelegt.

Damit diese Polymeren (A) den zuvor dargelegten Randwinkel aufweisen, können diese Polymere polare Gruppen umfassen. Diese Gruppen können beispielsweise durch die Wahl von geeigneten Copolymeren in das Polymere (A) eingebaut werden. Des weiteren können diese Gruppen auch durch Pfropfcopolymerisation auf ein Polymer gepfropft werden.

Als polare Gruppen sind besonders Hydroxyl-, Carboxyl-, Sulfonyl-, Carbonsäureamid, Nitril- und Silanol-Gruppen zu nennen. Sie sind vorzugsweise Bestandteil einer makromolekularen Verbindung, die gleichzeitig unpolare Gruppen enthält, wie Alkyl-, Alkylen-, Aryl- oder Arylengruppen.

Das Verhältnis von polaren zu unpolaren Gruppen der Polymeren (A) muss so gewählt werden, dass Haftung sowohl zu der wasserabstoßenden, also unpolaren Kunststoffoberfläche als auch zu der wasserspreitenden, also hydrophilen Schicht erreicht wird. Die Polarität darf nicht so groß sein, dass das Material der haftvermittelnden Schicht selbst wasserlöslich oder wasserquellbar wäre. Die Quellung bei Sättigung mit Wasser bei 20° liegt nicht über 10 Vol-% und vorzugsweise nicht über 2 Vol-%. Die Polarität der Polymeren (A) soll jedoch auch nicht so niedrig sein, dass das Material in völlig unpolaren Lösungsmitteln, wie Benzin, löslich wäre. Die meisten geeigneten Materialien sind in begrenzt polaren organischen Lösungsmitteln löslich, wie Chlorkohlenwasserstoffen, Estern, Ketonen, Alkoholen oder Äthern oder deren Gemischen mit Aromaten.

Die erforderliche Ausgewogenheit der Affinitäten zu den beiden angrenzenden Schichten wird im allgemeinen erreicht, wenn das Material der haftvermittelnden Schicht 0,4 bis 100 Milliäquivalent polare Gruppen je 100 g des Polymermaterials enthält.

Die polaren Gruppen unterscheiden sich in ihrer polarisierenden Wirksamkeit. Diese nimmt in der Reihenfolge Nitril, Hydroxyl, prim. Carbonsäureamid, Carboxyl, Sulfonyl, Silanol zu. Je stärker die polarisierende Wirkung ist, umso geringer liegt der erforderliche Gehalt in dem Polymermaterial. Während von den schwach polaren Gruppen 4 bis 100 mÄquivalent polare Gruppen je 100g Polymermaterial verwendet werden, genügen 0,4 bis 20 mÄquivalent/100 g der stark polaren Gruppen- Wird der Gehalt an polaren Gruppen zu niedrig gewählt, so wird keine ausreichende Haftung der wasserspreitenden Schicht erreicht. Ist dagegen der Gehalt an polaren Gruppen zu hoch, steigt die Wasserquellbarkeit zu stark an, was wiederum die Haftung vermindert.

Die Polarität der durch Polykondensation oder Polyaddition erhaltenen Polymere, die Hydroxygruppen umfassen, kann unter anderem durch Umsetzung mit Silanen erhöht werden, die mindestens zwei hydrolysierbare Gruppen pro Siliciumatom aufweisen, wie Halogenatom, Alkoxygruppen und/oder Aryloxygruppen.

Zu diesen Verbindungen gehören unter anderem Tetraalkoxysilane, beispielsweise Tetramethoxysilan, Tetraethoxysilan; Trialkoxysilane, beispielsweise Methyl-trimethoxysilan, Methyl-triethoxysilan, Ethyl-trimethoxysilan, n-Propyl-trimethoxysilan, n-Propyl-triethoxysilan, i-Propyl-triethoxysilan; Dialkoxysilane beispielsweise Dimethyldimethoxysilan, Dimethyl-diethoxysilan, Diethyl-dimethoxysilan, Diethyl-diethoxysilan, Di-n-propyl-dimethoxysilan, Di-n-propyldiethoxysilan, Di-i-propyl-dimethoxysilan, Di-i-propyl-diethoxysilan.

Entsprechend den Polymeren, die durch Polykondensation oder Polyaddition erhältlich sind, können auch die Polymere modifiziert werden, die durch radikalische Polymerisation von Vinylverbindungen erhalten werden können.

Zur Modifikation dieser Polyvinylverbindungen können insbesondere Silane eingesetzt werden, die Vinylgruppen umfassen, die nicht hydrolysierbar sind. Zu den besonders geeigneten vinylischen Silanverbindungen gehören unter anderem CH₂=CH-Si(OCH₃)₃, CH₂=CH-Si(OC₂H₅)₃, CH₂=CH-SiCl₃, CH₂=CH-Si(CH₃)(OCH₃)₂, CH₂=CH-CO₂-C₃H₇-Si(OCH₃)₃, CH₂=CH-CO₂-C₃H₇-Si(OCH₃)₃, CH₂=C(CH₃)-CO₂-C₃H₇-Si(OCH₃)₃, CH₂=C(CH₃)-CO₂-C₃H₇-Si(OC₂H₅)₃ und CH₂=C(CH₃)-CO₂-C₃H₇-SiCl₃.

Darüber hinaus sind Polymere (A) bevorzugt, die Gruppen aufweisen, die bei und/oder nach der Bildung der Zwischenschicht (b) zu einer Vernetzung führen. Hierzu sind insbesondere Silane mit 3 hydrolysierbaren Gruppen sowie einer vinylischen Gruppe geeignet, wobei Beispiele für diese Silane zuvor dargelegt wurden.

Die polaren Polymere (A) können einzeln oder als Mischung in der haftvermittelnden Zwischenschicht (b) vorhanden sein.

Die Menge an Polymer (A) in der haftvermittelnden Zwischenschicht (b) kann in weiten Bereichen liegen. Dies ist insbesondere von der Art und der Polarität des Polymeren (B) abhängig. Im allgemeinen liegt der Anteil im Bereich von 30 bis 95 Gew.-%, vorzugsweise 40 bis 90 Gew.-% und besonders bevorzugt 50 bis 85 Gew.-%, bezogen auf das Gewicht der Zwischenschicht (b), ohne dass hierdurch eine Beschränkung erfolgen soll.

Neben dem polaren Polymeren (A) umfasst die haftvermittelnde Zwischenschicht (b) mindestens ein Polymer (B), das unpolare Eigenschaften aufweist. Diese Eigenschaft spiegelt sich in dem Randwinkel wider, den Wasser auf einer Oberfläche bildet, die aus Polymeren (B) gebildet wird. Diese Schicht kann vernachlässigbar geringe Mengen an Additive oder Lösungsmittelresten enthalten, wobei diese Zusatzstoffe den Kontaktwinkel nicht beeinflussen dürfen. Die Löslichkeit von Polymer (B) in Wasser ist gering. Im allgemeinen ist diese kleiner 1 g/l.

Die Art des Polymeren (B) ist nicht besonders beschränkt, falls die sich durch den Randwinkel, den Wasser auf einer Oberfläche aus Polymer (B) bildet, hohe Hydrophobizität gegeben ist. Dementsprechend weist eine als Polymer (B) geeignete polymere Verbindung einen hohen Anteil an unpolaren Gruppen auf.

Die Hydrophobizität der Polymere (B) zeigt sich durch einen großen Randwinkel, den Wasser auf einer Schicht des Polymeren (B) bildet. So zeigt eine Schicht des Polymeren (B) einen Randwinkel größer oder gleich 75°, vorzugsweise liegt der Randwinkel der Polymeren (B) im Bereich von 75° bis 90° und besonders bevorzugt im Bereich von 76° bis 80°.

So kann das Polymere (B) durch Polyadditions- oder Polykondensationsreaktionen erhalten werden. Hierzu gehören beispielsweise Polyether, Polyester, Polycarbonate, Polyurethane und Polyamide.

Eine weitere Gruppe von als Polymer (B) geeigneten Verbindungen sind Polyvinylverbindungen. Zu diesen gehören beispielsweise Polyolefine, wie Polypropylen, Polyethylen; Polyarylverbindungen, wie Polystyrol; Poly(meth)acrylate und Polyvinylacetate. Zur Herstellung dieser Polymere geeignete Vinylverbindungen wurden zuvor dargelegt.

Die zuvor genannten Polymere umfassen teilweise polare Gruppen. Dies ist unkritisch, solange deren Polarität nicht zu einem Randwinkel führt, den Wasser mit einer Schicht aus Polymeren (B) bildet, der außerhalb des angegebenen Bereichs liegt. Hierbei ist festzuhalten, dass die Polarität dieser Polymere durch hydrophobe Seitenketten, beispielsweise Alkylketten herabgesetzt werden kann, so dass die zuvor genannten Randwinkelwerte erzielt werden.

Bevorzugte Polymere (B) können durch radikalische Polymerisation von Mischungen erhalten werden, die folgende Bestandteile aufweisen

| | |
|---|---|
| (Meth)acrylat | 50 - 100 Gew.-% |
| Methyl(meth)acrylat | 0-60 Gew.-% |
| vorzugsweise | 0-50 Gew.-% |
| Ethyl(meth)acrylat | 0 - 60 Gew.-% |
| vorzugsweise | 0-50 Gew.-% |
| C₃ - C₆ (Meth)acrylat | 0 - 100 Gew.-% |
| ≥ C₇ (Meth)acrylat | 0 - 50 Gew.-% |
| mehrwertige (Meth)acrylate | 0 - 5 Gew.-% |
| Comonomere | 0-50 Gew.-% |
| Vinylaromaten | 0-30 Gew.-% |
| Vinylester | 0 - 30 Gew.-%, |

bezogen auf das Gewicht der Vinylverbindungen.

Die unpolaren Polymere (B) können einzeln oder als Mischung in der haftvermitteinden Zwischenschicht (b) vorhanden sein.

Die in der haftvermittelnden Zwischenschicht (b) vorhandene Menge an Polymer (B) kann in weiten Bereichen liegen. Dies ist insbesondere von der Art und der Polarität des Polymeren (B) abhängig. Im allgemeinen liegt der Anteil im Bereich von 5 bis 70 Gew.-%, vorzugsweise 10 bis 60 Gew.-% und besonders bevorzugt 15 bis 50 Gew.-%, bezogen auf das Gewicht der Zwischenschicht (b), ohne dass hierdurch eine Beschränkung erfolgen soll.

Des weiteren kann die Zwischenschicht (b) übliche Additive und Zusatzstoffe enthalten. Hierzu gehören insbesondere Tenside und Verlaufshilfsmittel.

Zur Herstellung der Zwischenschicht (b) kann beispielsweise durch Mischen von Polymer (A) und Polymer (B) in einem geeigneten Lösungsmittel oder Dispergiermittel eine Beschichtungsmischung hergestellt werden, die die zuvor dargelegten Additive enthalten kann. Aufgrund der unterschiedlichen Polarität der Polymere (A) und (B) kann die Verwendung von Lösungsmittelgemischen notwendig sein.

Die zuvor dargelegten Beschichtungsmischungen können mit jeder bekannten Methode auf die Kunststoffsubstrate aufgebracht werden. Hierzu gehören unter anderem Tauchverfahren, Sprühverfahren, Rakeln, Flutbeschichtungen und Rollen- oder Walzenauftrag.

Die so aufgetragenen Beschichtungen lassen sich im allgemeinen in relativ kurzer Zeit, beispielsweise innerhalb 1 Minute bis 1 Stunde, in der Regel innerhalb ca. 3 Minuten bis 30 Minuten, vorzugsweise innerhalb von ca. 5 Minuten bis 20 Minuten und bei vergleichsweise niedriger Temperatur, beispielsweise bei 70 - 110°C, vorzugsweise bei ca. 80°C härten bzw. trocknen.

Die Schichtdicke der Zwischenschicht ist nicht besonders kritisch. Aus wirtschaftlichen Gründen wird diese jedoch nach Möglichkeit relativ gering gewählt, wobei sich die untere Grenze aus der Stabilität der gesamten Beschichtung (a) und (b) ergibt. Im allgemeinen liegt die Dicke der haftvermittelnden Zwischenschicht nach der Härtung aber in einem Bereich von 0,05 µm bis 10 µm, bevorzugt 0,1 µm bis 2 µm und besonders bevorzugt 0,2 µm bis 1 µm, ohne dass hierdurch eine Beschränkung erfolgen soll. Die Schichtdicken der Beschichtungen (a) und/oder (b) kann durch eine Aufnahme eines Transmissionselektronen-Mikroskops (TEM) bestimmt werden.

Der Kontaktwinkel, den Wasser bei 20°C auf einer Zwischenschicht (b) bildet, liegt gemäß einem besonderen Aspekt der vorliegenden Erfindung im Bereich von 63° bis 80°, insbesondere im Bereich von 65° bis 78° und besonders bevorzugt im Bereich von 68° bis 77°, ohne dass hierdurch eine Beschränkung erfolgen soll.

Nach dem Trocknen der haftvermittelnden Zwischenschicht (b) wird hierauf eine wasserspreitende anorganische Beschichtung (a) aufgebracht.

Der Begriff wasserspreitend bedeutet, dass ein Wassertropfen auf der Oberfläche einen Randwinkel von höchstens 20°, vorzugsweise höchstens 10° bildet. Diese Größe wird bei 20°C mit einem Kontaktwinkelmesssystem G40 der Fa. Krüss, Hamburg bestimmt.

Im Rahmen der vorliegenden Erfindung bedeutet der Begriff anorganisch, dass der Kohlenstoffanteil der anorganischen Beschichtung maximal 25 Gew.-%, vorzugsweise maximal 17 Gew.-% und ganz besonders bevorzugt maximal 10 Gew.-%, bezogen auf das Gewicht der anorganischen Beschichtung (a), beträgt. Diese Größe kann mittels Elementaranalyse bestimmt werden.

Als anorganische Beschichtung können insbesondere Polysiloxane, Silancokondensate und Kieselsole aufgebracht werden, wobei deren Kohlenstoffanteil auf die zuvor dargelegten Bereiche beschränkt ist.

Silancokondensate, die zur Herstellung der Beschichtung (a) dienen können, sind an sich bekannt und werden zur Ausrüstung von polymeren Verglasungsmaterialien eingesetzt. Sie zeichnen sich aufgrund ihres anorganischen Charakters durch gute Beständigkeit gegenüber UV-Strahlung und Witterungseinflüssen aus.

Diese Silancokondensate können unter anderem durch Kondensation oder Hydrolyse von organischen Siliciumverbindungen der allgemeinen Formel (I)

R¹ₙSiX₄₋ₙ (I),

worin R¹ eine 1 bis 20 Kohlenstoffatome aufweisende Gruppe, X ein Alkoxyrest mit 1 bis 20 Kohlenstoffatomen oder ein Halogen und n eine ganze Zahl von 0 bis 3, vorzugsweise 0 oder 1 darstellt, wobei verschiedene Reste X oder R¹ jeweils gleich oder unterschiedlich sein können, erhalten werden.

Der Ausdruck "eine 1 bis 20 Kohlenstoffatome aufweisende Gruppe" kennzeichnet Reste organischer Verbindungen mit 1 bis 20 Kohlenstoffatomen. Er umfasst Alkyl-, Cycloalkyl-, aromatische Gruppen, Alkenylgruppen und Alkinylgruppen mit 1 bis 20 Kohlenstoffatomen, sowie heteroalipatische und heteroaromatische Gruppen, die neben Kohlenstoff- und Wasserstoffatomen insbesondere Sauerstoff-, Stickstoff-, Schwefel- und Phosphoratome aufweisen. Dabei können die genannten Gruppen verzweigt oder nicht verzweigt sein, wobei der Rest R¹ substituiert oder unsubstituiert sein kann. Zu den Substituenten gehören insbesondere Halogene, 1 bis 20 Kohlenstoffatome aufweisende Gruppen, Nitro-, Sulfonsäure-, Alkoxy-, Cycloalkoxy-, Alkanoyl-, Alkoxycarbonyl-, Sulfonsäureester-, Sulfinsäure-, Sulfinsäureester-, Thiol-, Cyanid-, Epoxy-, (Meth)acryloyl-, Amino- und Hydroxygruppen. Im Rahmen der vorliegenden Erfindung bezeichnet der Ausdruck "Halogen" ein Fluor-, Chlor-, Brom- oder lodatom.

Zu den bevorzugten Alkylgruppen gehören die Methyl-, Ethyl-, Propyl-, Isopropyl-, 1-Butyl-, 2-Butyl-, 2-Methylpropyl-, tert.-Butyl-, Pentyl- und die 2-Methylbutyl-Gruppe.

Zu den bevorzugten Cycloalkylgruppen gehören die Cyclopropyl-, Cyclobutyl-, Cyclopentyl-, Cyclohexyl-, Cycloheptyl- und die Cyclooctyl-Gruppe, die gegebenenfalls mit verzweigten oder nicht verzweigten Alkylgruppen substituiert sind.

Zu den bevorzugten Alkoxygruppen gehören die Methoxy-, Ethoxy-, Propoxy-, Butoxy-, tert.-Butoxy-, Hexyloxy-, 2-Methylhexyloxy-, Decyloxy- oder Dodecyloxy-Gruppe.

Zu den bevorzugten Cycloalkoxygruppen gehören Cycloalkoxygruppen, deren Kohlenwasserstoffrest eine der vorstehend genannten bevorzugten Cycloalkylgruppen ist.

Ganz besonders bevorzugt stellt der Rest R¹ eine Methyl- oder Ethylgruppe dar.

Hinsichtlich der Definition der Gruppe X in Formel (I) bezüglich der Alkoxygruppe mit 1 bis 20 Kohlenstoffatome sowie des Halogens sei auf die zuvor genannte Definition verwiesen. Bevorzugt stellt die Gruppe X ein Methoxy- oder Ethoxyrest oder ein Brom- oder Chloratom dar.

Diese Verbindungen können einzeln oder als Mischung verwendet werden, um Silancokondensate herzustellen.

Bevorzugt weisen mindestens 80 Gew.-%, insbesondere mindestens 90 Gew.-% der eingesetzten Silanverbindungen vier Alkoxygruppen oder Halogenatome auf, bezogen auf das Gewicht der kondensierbaren Silane.

Tetraalkoxysilane umfassen Tetramethoxysilan, Tetraethoxysilan, Tetra-n-propoxysilan, Tetra-i-propoxysilan und Tetra-n-butoxysilane.

Besonders bevorzugt sind Tetramethoxysilan und Tetraethoxysilan. Gemäß einem besonderen Aspekt der vorliegenden Erfindung beträgt der Anteil dieser besonders bevorzugten Tetraalkoxysilanen mindestens 80 Gew.-%, insbesondere mindestens 90 Gew.-%, bezogen auf das Gewicht der eingesetzten Silanverbindungen.

Gemäß einem weiteren Aspekt der vorliegenden Erfindung können auch Silankondensate eingesetzt werden, die kolloidal gelöste SiO₂-Partikel enthalten. Derartige Lösungen können nach dem Sol-Gel-Verfahren erhalten werden, wobei insbesondere Tetraalkoxysilane und/oder Tetrahalogensilane kondensiert werden.

Üblich werden aus den zuvor genannten Silanverbindungen wasserhaltige Beschichtungsmittel dargestellt, indem man siliciumorganischen Verbindungen, mit einer zur Hydrolyse ausreichenden Menge Wasser, d.h. >, 0,5 Mol Wasser pro Mol der zur Hydrolyse vorgesehenen Gruppen, wie z.B. Alkoxygruppen hydrolysiert, vorzugsweise unter Säurekatalyse. Als Säuren können z.B. anorganische Säuren, wie Salzsäure, Schwefelsäure, Phosphorsäue, Salpetersäure usw., oder organische Säuren, wie Carbonsäuren, organische Sulfonsäuren usw., oder saure Ionenaustauscher zugesetzt werden, wobei der pH der Hydrolysereaktion in der Regel zwischen 2 und 4,5, vorzugsweise bei 3 liegt.

Im allgemeinen zeigt sich nach dem Zusammengeben der Reaktionspartner ein Temperaturanstieg. In gewissen Fällen kann es notwendig werden, zum Start der Reaktion von außen Wärme zuzuführen, beispielsweise durch Erwärmen des Ansatzes auf 40 - 50°C. Im allgemeinen wird darauf geachtet, dass die Reaktionstemperatur 55°C nicht überschreitet. Die Reaktionsdauer ist in der Regel relativ kurz, sie liegt üblich unter einer Stunde, beispielsweise bei 45 min.

Die Silanverbindungen können zu Polymeren kondensiert werden, die im allgemeinen ein Gewichtsmittel des Molekulargewichts M_{W} im Bereich von 100 bis 20000, bevorzugt 200 bis 10000 und besonders bevorzugt 500 bis 1500 g/Mol aufweisen. Diese Molmasse kann beispielsweise durch NMR-Spektroskopie bestimmt werden.

Die Kondensationsreaktion kann beispielsweise durch Kühlen auf Temperaturen unter 0°C oder durch Erhöhen des pH-Wertes mit geeigneten Basen, beispielsweise organische Basen, wie Amine, Alkali- oder Erdalkalihydroxiden, abgebrochen werden.

Zur weiteren Bearbeitung kann ein Teil des Wasser-Alkoholgemisches und der flüchtigen Säuren aus der Reaktionsmischung abgetrennt werden, beispielsweise durch Destillation.

Die erfindungsgemäß einsetzbaren Silancokondensate können Härtungskatalysatoren, beispielsweise in Form von Zinkverbindungen und/oder anderer Metallverbindungen, wie Kobalt-, Kupfer- oder Calciumverbindungen, insbesondere deren Octoate oder Naphthenate, enthalten. Der Anteil der Härtungskatalysatoren beträgt in der Regel 0,1 - 2,5 Gew.-%, speziell 0,2 - 2 Gew.-%, bezogen auf das gesamte Silancokondensat, ohne dass hierdurch eine Beschränkung erfolgen soll. Besonders genannt seien beispielsweise Zinknaphthenat, -octoat, -acetat, -sulfat usw.

Des weiteren können auch Oxidschichten, insbesondere Halbmetall und Metalloxide als wasserspreitende Beschichtung (a) eingesetzt werden. Zu den geeigneten Verbindungen gehören insbesondere Oxide und Hydroxide, die sich von Silicium, Aluminium, Titan, Zirkon, Zink und/oder Chrom ableiten.

Diese Oxide können einzeln oder als Mischungen, beispielsweise als Mischoxide verwendet werden. Die Löslichkeit dieser Oxide und/oder Hydroxide in Wasser sollte möglichst gering sein, beispielsweise sollte die Löslichkeit in Wasser bei 20° unter 1000 µg/l, vorzugsweise unter 200 µg/l liegen.

Diese Oxide können beispielsweise in Form von kolloidalen Lösungen aufgebracht werden, die durch Hydrolyse von Alkoxyverbindungen gewonnen werden. Derartige kolloidale Lösungen sind beispielsweise aus EP-A-0 149 182, EP-A-0 826 663, EP-A-0 850 203 und EP-1 022 318 bekannt.

Die Teilchengrösse dieser Oxid-Partikel ist unkritisch, wobei jedoch die Transparenz von der Partikelgröße abhängig ist. Bevorzugt weisen die Partikel höchstens eine Größe von 300 nm auf, wobei sie insbesondere in einem Bereich von 1 bis 200 nm, bevorzugt 1 bis 50 nm liegen.

Die zuvor beschriebenen Beschichtungsmittel können kommerziell unter dem Handelsnamen ®Ludox (Fa. Grace, Worms); ®Levasil (Fa. Bayer, Leverkusen); ®Klebosol, (Fa. Clariant) erhalten werden.

Des weiteren können die Beschichtungsmittel zur Herstellung der anorganischen Beschichtung (a) übliche Additive und Verarbeitungshilfsmittel enthalten. Zu diesen gehören unter anderem insbesondere Tenside und Verlaufshilfsmittel.

Die zuvor dargelegten Beschichtungsmittel zur Herstellung der anorganischen Beschichtung (a) können mit jeder bekannten Methode auf die Kunststoffsubstrate aufgebracht werden, die beispielhaft zuvor dargelegt wurden.

Die so aufgetragenen Lacke lassen sich im allgemeinen in relativ kurzer Zeit, beispielsweise innerhalb 0,5 Minute bis 1 Stunde, in der Regel innerhalb ca. 1 Minuten bis 30 Minuten, vorzugsweise innerhalb von 3 Minuten bis 20 Minuten und bei vergleichsweise niedriger Temperatur, beispielsweise bei 60 - 110°C, vorzugsweise bei ca. 80°C zu hervorragend haftfesten Beschichtungen aushärten.

Die Schichtdicke der anorganischen Beschichtung (a) ist relativ unkritisch. Im allgemeinen liegt diese Größe nach der Härtung aber in einem Bereich von 0,05 µm bis 2 µm, bevorzugt 0,05 µm bis 1 µm und besonders bevorzugt 0,05 µm bis 0,5 µm, ohne dass hierdurch eine Beschränkung erfolgen soll. Die Schichtdicke der Beschichtungen (a) und (b) liegt vorzugsweise im Bereich von 0,1 bis 3 µm.

Die Kunststoffkörper der vorliegenden Erfindung lassen sich hervorragend thermisch umformen, ohne dass hierdurch deren wasserspreitende Beschichtung beschädigt werden würde. Das Umformen ist dem Fachmann bekannt. Hierbei wird der Kunststoffkörper erhitzt und über eine geeignete Schablone umgeformt. Die Temperatur, bei der die Umformung stattfindet ist abhängig von der Erweichungstemperatur des Substrats, aus dem der Kunststoffkörper hergestellt wurde. Derartige Verfahren werden insbesondere zur Verarbeitung von Gussglas eingesetzt.

Die mit einer wasserspreitenden Beschichtung versehenen Kunststoffkörper der vorliegenden Erfindung zeigen eine hohe Scheuerfestigkeit. Bevorzugt ist die Scheuerfestigkeit gemäß DIN 53778 größer oder gleich 3 000 Zyklen, insbesondere größer oder gleich 5 000 Zyklen und besonders bevorzugt größer oder gleich 10 000 Zyklen.

Gemäß einem besonderen Aspekt der vorliegenden Erfindung ist der Kunststoffkörper transparent, wobei die Transparenz τ_{D65/10} gemäß DIN 5033 mindestens 70%, bevorzugt mindestens 75% beträgt.

Bevorzugt weist der Kunststoffkörper einen E-Modul nach ISO 527-2 von mindestens 1000 MPa, insbesondere mindestens 1500 MPa auf, ohne dass hierdurch eine Beschränkung erfolgen soll.

Die erfindungsgemäßen Kunststoffkörper sind im allgemeinen sehr beständig gegenüber Bewitterung. So ist die Bewitterungsbeständigkeit gemäß DIN 53387 (Xenotest) mindestens 5000 Stunden.

Auch nach einer langen UV-Bestrahlung von mehr als 5000 Stunden ist der Gelbindex gemäß DIN 6167 (D65/10) von bevorzugten Kunststoffkörpern kleiner oder gleich 8, bevorzugt kleiner oder gleich 5, ohne dass hierdurch eine Beschränkung erfolgen soll.

Die Kunststoffkörper der vorliegenden Erfindung können beispielsweise im Baubereich, insbesondere zur Herstellung von Gewächshäusern oder Wintergärten, oder als Lärmschutzwand dienen.

Nachfolgend wird die Erfindung durch Beispiele und Vergleichsbeispiele eingehender erläutert, ohne dass die Erfindung auf diese Beispiele beschränkt werden soll.

### Beispiel 1

### Herstellung der haftvermittelnden Zwischenschicht

Ein erstes Copolymer aus 88 % Methylmethacrylat und 12 % gamma-Methacryloyloxy-propyl-trimethoxysilan und ein zweites Copolymer aus 20 % Methylmethacrylat und 80 % Butylmethacrylat wurden im Verhältnis 1:1 in Butylacetat gelöst und durch Fluten in einer dünnen Schicht auf PMMA-Platten aufgetragen. Nach dem Abtropfen wird die beschichtete Platte 20 min bei 80°C im Ofen getrocknet.

Die getrocknete Zwischenschicht wies einen Kontaktwinkel mit Wasser bei 20°C von 76,5° auf. Im Vergleich hierzu betrug der Kontaktwinkel einer aus dem ersten Copolymer hergestellten Zwischenschicht bei 20°C etwa 66°, wobei die Methoxygruppen des gamma-Methacryloyloxy-propyl-trimethoxysilans zum Teil hydrolysiert waren. Eine Zwischenschicht aus dem zweiten Copolymer wies einen Kontaktwinkel bei 20° von 77,5° auf.

### Herstellung der wasserspreitenden Schicht

25 % eines anionischen Kieselsols (Feststoffgehalt 30 %) werden mit 0,1 % (O-Ethyl-dithiokohlensäure-(3-sulfopropyl)-ester, Kaliumsalz) und 0,4 % eines ethoxylierten Fettsäurealkohols mit vollentsalztem Wasser zu 100 Teilen ergänzt und durch Fluten in dünner Schicht auf die mit der haftvermittelnden Schicht versehene Platte beschichtet.

Um die Schaumbildung in der Beschichtungsflüssigkeit zu verhindern oder einzudämmen, kann bei Bedarf ein handelsüblicher Entschäumer zugesetzt werden.

Die Schichtdicke der haftvermittelnden Schicht und der Wirkstoffschicht lassen sich bei Bedarf durch Verdünnen mit vollentsalztem Wasser, ggf. unter Zusatz weiteren Tensids beliebig einstellen. Insbesondere bei längeren Platten ist es vorteilhaft, die Verdünnung zu erhöhen, um sicherzustellen, dass die Schichtdicke am unteren Ende nicht zu hoch wird und den Schichtdicke-Gradienten von oben nach unten möglichst gering zu halten. Die Bestimmung der Schichtdicke der extrem dünnen Schichten kann mittels Dünnschnitt im Transmissionselektronenmikroskop erfolgen.

Nach dem Ablüften wird die mit haftvermittelnder Schicht und wasserspreitender Schicht versehene Platte 20 min bei 80°C im Umlufttrockenschrank getrocknet.

Die Bestimmung der Haftung der Beschichtung wurde gemäß dem Nassscheuertest nach DIN 53778 mit einem Nassscheuertestgerät der Fa. Gardner, Modell M 105/A durchgeführt. Es wurde ein Wert von 12000 Zyklen bestimmt.

Des weiteren wurde der Kunststoffkörper thermisch umgeformt. Thermische Umformung erfolgte durch Aufheizen der beschichteten Platten im Umlufttrockenschrank auf 150 - 170°C. Die Wahl der Temperatur hängt von der Wärmeformbeständigkeit des Substrats ab. Im Falle von extrudiertem PMMA, das sich im Vergleich zu gegossenem PMMA durch weichmachende Comonomere, z.B. Acrylate, auszeichnet und ein niedrigeres Molekulargewicht hat, genügt bereits eine niedrigere Temperatur. Im Falle von gegossenem PMMA, das Molekulargewichte über 1 Mio bis zu mehreren Millionen aufweist, häufig aus reinem MMA-Homopolymer besteht und ggf. schwach vernetzt ist, kommt eine höhere Temperatur zur Anwendung. Nachdem die Platten erweicht sind, werden sie über eine halbrunde Form mit einem vorgegebenen Biegungsradius gebogen und erkalten gelassen.

Die nach Beispiel 1 hergestellten Platten weisen nach Umformen mit einem Biegeradius von 47,5 mm keine Trübungen oder Risse in der Beschichtung auf und spreiten Wasser gut mit niedrigen Randwinkeln.

Die Beurteilung der Wasserspreitung kann an den gekrümmten Substraten nur visuell erfolgen, da gekrümmte Proben im Goniometer nicht mehr vermessen werden können. Sie wurde hierbei qualitativ mit gut beurteilt.

An den gekrümmten Proben kann auch kein Nassscheuertest erfolgen, da dieser auch plane Substrate erfordert.

### Vergleichsbeispiel 1

Das Beispiel 1 wurde im wesentlichen wiederholt, wobei jedoch die haftvermittelnde Zwischenschicht kein zweites Copolymer aus 20 % Methylmethacrylat und 80 % Butylmethacrylat aufwies. Der Kontaktwinkel der Zwischenschicht betrug 66°.

Die Scheuerfestigkeit betrug ebenfalls 12000 Zyklen. Bei einer thermischen Umformung zeigten sich starke Trübungen, wobei die visuell beurteilte Wasserspreitung schlecht war.

### Beispiel 2

Beispiel 1 wird wiederholt, jedoch wird das Copolymer aus 88 % Methylmethacrylat und 12 % gamma-Methacryloyl-propyl-trimethoxysilan und das zweite Copolymer aus 20 % Methylmethacrylat und 80 % Butylmethacrylat im Verhältnis 8:1 in Butylacetat gelöst und durch Fluten in einer dünnen Schicht auf PMMA-Platten aufgetragen. Der Kontaktwinkel der Zwischenschicht betrug 69,5°.

Die Scheuerfestigkeit beträgt 20.000 Hübe. Nach thermischer Umformung ist die Platte transparent und spreitet Wasser gut.

### Vergleichsbeispiel 2

Das Beispiel 1 wurde im wesentlichen wiederholt, wobei jedoch die haftvermittelnde Zwischenschicht ein zweites Copolymer aus 19 % Methylmethacrylat, 1% Methacrylsäure und 80 % Butylmethacrylat aufwies. Der Kontaktwinkel der Zwischenschicht betrug 61°. Eine Zwischenschicht aus dem zweiten Copolymer zeigte einen Kontaktwinkel bei 20° von etwa 55° auf.

Bei einer thermischen Umformung zeigten sich starke Trübungen, wobei die visuell beurteilte Wasserspreitung schlecht war.

## Patentansprüche

1. Wasserspreitender Kunststoffkörper aufweisend ein Kunststoffsubstrat, mindestens eine wasserspreitende, anorganische Beschichtung (a) und eine haftvermittelnde, sich zwischen dem Kunststoffsubstrat und der anorganischen Beschichtung befindliche Zwischenschicht (b), **dadurch gekennzeichnet,**
**dass** die Zwischenschicht eine in einem geeigneten Lösungsmittel oder Dispergiermittel hergestellte Mischung von zwei Polymeren (A) und (B) umfasst,
wobei Wasser auf einer Schicht des Polymeren (A) einen Randwinkel kleiner oder gleich 73° bei 20°C und Wasser auf einer Schicht des Polymeren (B) einen Randwinkel größer oder gleich 75° bei 20°C bildet.

2. Kunststoffkörper gemäß Anspruch 1, **dadurch gekennzeichnet, dass** das Kunststoffsubstrat Cycloolefin-Copolymere, Polyethylenterephthalate, Polycarbonate und/oder Poly(meth)acrylate umfasst.

3. Kunststoffkörper gemäß Anspruch 2, **dadurch gekennzeichnet, dass** das Kunststoffsubstrat aus Polymethylmethacrylat besteht.

4. Kunststoffkörper gemäß einem oder mehreren der vorhergehenden Ansprüche, **dadurch gekennzeichnet, dass** das Kunststoffsubstrat eine Schlagzähigkeit von mindestens 10 kJ/m² gemäß ISO 179/1 aufweist.

5. Kunststoffkörper gemäß einem oder mehreren der vorhergehenden Ansprüche, **dadurch gekennzeichnet, dass** das Kunststoffsubstrat eine Dicke im Bereich von 1 mm bis 200 mm aufweist.

6. Kunststoffkörper gemäß einem oder mehreren der vorhergehenden Ansprüche, **dadurch gekennzeichnet, dass** die Löslichkeit von Polymer (A) in Wasser kleiner 1 g/l ist.

7. Kunststoffkörper gemäß einem oder mehreren der vorhergehenden Ansprüche, **dadurch gekennzeichnet, dass** die Löslichkeit von Polymer (B) in Wasser kleiner 1 g/l ist.

8. Kunststoffkörper gemäß einem oder mehreren der vorhergehenden Ansprüche, **dadurch gekennzeichnet, dass** die Dicke der haftvermittelnden Zwischenschicht (b) im Bereich von 0,05 und 2,0 µm liegt.

9. Kunststoffkörper gemäß einem oder mehreren der vorhergehenden Ansprüche, **dadurch gekennzeichnet, dass** der Anteil an Polymer (A) in der haftvermittelnden Zwischenschicht (b) im Bereich von 30 bis 95 Gew.-%, bezogen auf das Gewicht der haftvermittelnden Zwischenschicht (b) liegt.

10. Kunststoffkörper gemäß einem oder mehreren der vorhergehenden Ansprüche, **dadurch gekennzeichnet, dass** der Anteil an Polymer (B) in der haftvermittelnden Zwischenschicht (b) im Bereich von 5 bis 70 Gew.-%, bezogen auf das Gewicht der haftvermittelnden Zwischenschicht (b) liegt.

11. Kunststoffkörper gemäß einem oder mehreren der vorhergehenden Ansprüche, **dadurch gekennzeichnet, dass** das Polymer (A) ein mit polaren Gruppen modifiziertes Vinylpolymer ist.

12. Kunststoffkörper gemäß einem oder mehreren der vorhergehenden Ansprüche, **dadurch gekennzeichnet, dass** das Polymer (B) ein Alkyl(meth)acrylat ist.

13. Kunststoffkörper gemäß einem oder mehreren der vorhergehenden Ansprüche, **dadurch gekennzeichnet, dass** das Polymer (B) durch radikalische Polymerisation von Mischungen erhalten werden, die folgende Bestandteile aufweisen
| | |
|---|---|
| (Meth)acrylat | 50 - 100 Gew.-% |
| Methyl(meth)acrylat | 0 - 60 Gew.-%, |
| Ethyl(meth)acrylat | 0 - 60 Gew.-% |
| C₃ - C₆ (Meth)acrylat | 0 - 100 Gew.-% |
| ≥ C₇ (Meth)acrylat | 0 - 50 Gew.-% |
| mehrwertige (Meth)acrylate | 0 - 5 Gew.-% |
| Comonomere | 0 - 50 Gew.-% |
| Vinylaromaten | 0 - 30 Gew.-% |
| Vinylester | 0 - 30 Gew.-%, |
bezogen auf das Gewicht der Vinylverbindungen.

14. Kunststoffkörper gemäß einem oder mehreren der vorhergehenden Ansprüche, **dadurch gekennzeichnet, dass** der Kohlenstoffgehalt der anorganische Beschichtung (a) höchstens 17 Gew.-%, bezogen auf das Gewicht der Beschichtung (a), beträgt.

15. Kunststoffkörper gemäß einem oder mehreren der vorhergehenden Ansprüche, **dadurch gekennzeichnet, dass** die anorganische Beschichtung (a) durch Härtung von kolloidalen Lösungen anorganischer und/oder metallorganischer Verbindungen erhältlich ist.

16. Kunststoffkörper gemäß einem oder mehreren der vorhergehenden Ansprüche, **dadurch gekennzeichnet, dass** die anorganische Beschichtung (a) durch Kondensation einer Zusammensetzung erhältlich ist, die mindestens 80 Gew.-% Alkyltrialkoxysilane und/oder Tetraalkoxysilane, bezogen auf den Gehalt an kondensierbaren Silanen, umfasst.

17. Kunststoffkörper gemäß einem oder mehreren der vorhergehenden Ansprüche, **dadurch gekennzeichnet, dass** die anorganische Beschichtung a) kondensierbare Polysiloxane umfasst, die ein Molekulargewicht im Bereich von 500 bis 1500 g/Mol aufweisen.

18. Kunststoffkörper gemäß einem oder mehreren der vorhergehenden Ansprüche, **dadurch gekennzeichnet, dass** die Schichtdicke der Beschichtungen (a) und (b) im Bereich von 0,1 bis 3 µm liegt.

19. Kunststoffkörper gemäß einem oder mehreren der vorhergehenden Ansprüche, **dadurch gekennzeichnet, dass** die Scheuerfestigkeit des Kunststoffkörpers gemäß DIN 53778 mindestens 10 000 Zyklen beträgt.

20. Kunststoffkörper gemäß einem oder mehreren der vorhergehenden Ansprüche, **dadurch gekennzeichnet, dass** der Kunststoffkörper einen E-Modul nach ISO 527-2 von mindestens 1500 MPa aufweist.

21. Kunststoffkörper gemäß einem oder mehreren der vorhergehenden Ansprüche, **dadurch gekennzeichnet, dass** der Kunststoffkörper eine Bewitterungsbeständigkeit gemäß DIN 53 387 von mindestens 5000 Stunden aufweist.

22. Kunststoffkörper gemäß einem oder mehreren der vorhergehenden Ansprüche, **dadurch gekennzeichnet, dass** der Kunststoffkörper eine Transparenz gemäß DIN 5033 von mindestens 70% aufweist.

23. Verfahren zur Herstellung von wasserspreitenden Kunststoffkörpern gemäß einem oder mehreren der Ansprüche 1 bis 23, **dadurch gekennzeichnet, dass** man auf ein Kunststoffsubstrat
a) eine haftvermittelnde Beschichtung (b) aufbringt und härtet, die zwei Polymere A) und B) umfasst, wobei Wasser auf einer Schicht des Polymeren (A) einen Randwinkel kleiner oder gleich 73° bei 20°C und Wasser auf einer Schicht des Polymeren (B) einen Randwinkel größer oder gleich 75° bei 20°C bildet, und anschließend
b) eine wasserspreitende, anorganische Beschichtung (a) aufbringt und härtet.

## Claims

1. Plastics article which inhibits water droplet formation and has a plastics substrate, at least one inorganic coating (a) which inhibits water droplet formation, and an adhesion-promoting intermediate layer (b) located between the plastics substrate and the inorganic coating, **characterized in that** the intermediate layer encompasses a mixture, prepared in a suitable solvent or dispersion medium, of two polymers (A) and (B), where water forms a contact angle smaller than or equal to 73° on a layer of the polymer (A) at 20°C and water forms a contact angle greater than or equal to 75° on a layer of the polymer (B) at 20°C.

2. Plastics article according to Claim 1, **characterized in that** the plastics substrate encompasses cycloolefin copolymers, polyethylene terephthalates, polycarbonates and/or poly(meth)acrylates.

3. Plastics article according to Claim 2, **characterized in that** the plastics substrate is composed of polymethyl methacrylate.

4. Plastics article according to one or more of the preceding claims, **characterized in that** the plastics substrate has an impact strength of at least 10 kJ/m² to ISO 179/1.

5. Plastics article according to one or more of the preceding claims, **characterized in that** the plastics substrate has a thickness in the range from 1 mm to 200 mm.

6. Plastics article according to one or more of the preceding claims, **characterized in that** the solubility of polymer (A) in water is smaller than 1 g/l.

7. Plastics article according to one or more of the preceding claims, **characterized in that** the solubility of polymer (B) in water is smaller than 1 g/l.

8. Plastics article according to one or more of the preceding claims, **characterized in that** the thickness of the adhesion-promoting intermediate layer (b) is in the range of 0.05 and 2.0 µm.

9. Plastics article according to one or more of the preceding claims, **characterized in that** the proportion of polymer (A) in the adhesion-promoting intermediate layer (b) is in the range from 30 to 95% by weight, based on the weight of the adhesion-promoting intermediate layer (b).

10. Plastics article according to one or more of the preceding claims, **characterized in that** the proportion of polymer (B) in the adhesion-promoting intermediate layer (b) is in the range from 5 to 70% by weight, based on the weight of the adhesion-promoting intermediate layer (b).

11. Plastics article according to one or more of the preceding claims, **characterized in that** the polymer (A) is a vinyl polymer modified using polar groups.

12. Plastics article according to one or more of the preceding claims, **characterized in that** the polymer (B) is an alkyl (meth) acrylate.

13. Plastics article according to one or more of the preceding claims, **characterized in that** the polymer (B) are obtained by free-radical polymerization of mixtures which comprise the following constituents
| | |
|---|---|
| (meth)acrylate | 50 - 100% by weight |
| methyl (meth)acrylate | 0 - 60% by weight |
| ethyl (meth)acrylate | 0 - 60% by weight |
| C₃-C₆ (meth) acrylate | 0 - 100% by weight |
| ≥ C₇ (meth)acrylate | 0 - 50% by weight |
| polyfunctional | |
| (meth)acrylates | 0 - 5% by weight |
| comonomers | 0 - 50% by weight |
| vinylaromatics | 0 - 30% by weight |
| vinyl esters | 0 - 30% by weight |
based on the weight of the vinyl compounds.

14. Plastics article according to one or more of the preceding claims, **characterized in that** the carbon content of the inorganic coating (a) is at most 17% by weight, based on the weight of the coating (a) .

15. Plastics article according to one or more of the preceding claims, **characterized in that** the inorganic coating (a) can be obtained by curing colloidal solutions of inorganic and/or organometallic compounds.

16. Plastics article according to one or more of the preceding claims, **characterized in that** the inorganic coating (a) is obtainable by condensing a composition which encompasses at least 80% by weight of alkyltrialkoxysilanes and/or tetraalkoxysilanes, based on the content of condensable silanes.

17. Plastics article according to one or more of the preceding claims, **characterized in that** the inorganic coating a) encompasses condensable polysiloxanes whose molar mass is in the range from 500 to 1 500 g/mol.

18. Plastics article according to one or more of the preceding claims, **characterized in that** the thickness of the coatings (a) and (b) is in the range from 0.1 to 3 µm.

19. Plastics article according to one or more of the preceding claims, **characterized in that** the scrub resistance of the plastics article to DIN 53778 is at least 10 000 cycles.

20. Plastics article according to one or more of the preceding claims, **characterized in that** the plastics article has a modulus of elasticity to ISO 527-2 of at least 1500 MPa.

21. Plastics article according to one or more of the preceding claims, **characterized in that** the plastics article has a weathering resistance to DIN 53 387 of at least 5000 hours.

22. Plastics article according to one or more of the preceding claims, **characterized in that** the plastics article has a transparency to DIN 5033 of at least 70%.

23. Process for producing plastics articles which inhibit water droplet formation according to one or more of Claims 1 to 23, **characterized in that**, onto a plastics substrate,
a) an adhesion-promoting coating (b) is applied and is cured, and encompasses two polymers (A) and (B), where water forms a contact angle smaller than or equal to 73° on a layer of the polymer (A) at 20°C, and water forms a contact angle greater than or equal to 75° on a layer of the polymer (B) at 20°C, and then
b) an inorganic coating (a) which inhibits water droplet formation is applied and cured.

## Revendications

1. Corps en matière synthétique, dispersant l'eau, présentant un substrat en matière synthétique, au moins un revêtement inorganique (a) dispersant l'eau, et une couche intermédiaire (b) donnant de l'adhérence, se trouvant entre le substrat en matière synthétique et le revêtement inorganique, **caractérisé en ce que** la couche intermédiaire comprend un mélange de deux polymères (A) et (B), fabriqué dans un solvant ou un agent de dispersion approprié, l'eau formant, sur une couche du polymère (A), un angle mouillant inférieur ou égal à 73° à la température de 20°C et l'eau formant, sur une couche du polymère (B), un angle mouillant supérieur ou égal à 75° à la température de 20°C.

2. Corps en matière synthétique selon la revendication 1, **caractérisé en ce que** le substrat en matière synthétique comprend des copolymères de cyclo-oléfines, un téréphtalate de polyéthylène, un polycarbonate et/ou un poly(méth)acrylate.

3. Corps en matière synthétique selon la revendication 2, **caractérisé en ce que** le substrat en matière synthétique se compose de polyméthylméthacrylate.

4. Corps en matière synthétique selon une ou plusieurs des revendications précédentes, **caractérisé en ce que** le substrat en matière synthétique présente une résilience d'au moins 10 kJ/m² conformément à la norme ISO 179/1.

5. Corps en matière synthétique selon une ou plusieurs des revendications précédentes, **caractérisé en ce que** le substrat en matière synthétique présente une épaisseur dans le domaine de 1 mm à 200 mm.

6. Corps en matière synthétique selon une ou plusieurs des revendications précédentes, **caractérisé en ce que** la solubilité du polymère (A) dans l'eau est inférieure à 1 g/l.

7. Corps en matière synthétique selon une ou plusieurs des revendications précédentes, **caractérisé en ce que** la solubilité du polymère (B) dans l'eau est inférieure à 1 g/l.

8. Corps en matière synthétique selon une ou plusieurs des revendications précédentes, **caractérisé en ce que** l'épaisseur de la couche intermédiaire donnant de l'adhérence (b) se situe dans le domaine de 0,05 et 2,0 µm.

9. Corps en matière synthétique selon une ou plusieurs des revendications précédentes, **caractérisé en ce que** la proportion de polymère (A) dans la couche intermédiaire donnant de l'adhérence (b) se situe dans le domaine de 30 à 95% en poids, par rapport au poids de la couche intermédiaire donnant de l'adhérence (b).

10. Corps en matière synthétique selon une ou plusieurs des revendications précédentes, **caractérisé en ce que** la proportion de polymère (B) dans la couche intermédiaire donnant de l'adhérence (b) se situe dans le domaine de 5 à 70% en poids, par rapport au poids de la couche intermédiaire donnant de l'adhérence (b).

11. Corps en matière synthétique selon une ou plusieurs des revendications précédentes, **caractérisé en ce que** le polymère (A) est un polymère vinylique modifié à l'aide de groupements polaires.

12. Corps en matière synthétique selon une ou plusieurs des revendications précédentes, **caractérisé en ce que** le polymère (B) est un (méth)acrylate d'alkyle.

13. Corps en matière synthétique selon une ou plusieurs des revendications précédentes, **caractérisé en ce que** le polymère (B) est obtenu par la polymérisation radicalaire de mélanges, qui présentent les constituants suivants:
| | |
|---|---|
| (Méth)acrylate | 50 - 100 % en poids |
| (Méth)acrylate de méthyle | 0 - 60 % en poids |
| (Méth)acrylate d'éthyle | 0 - 60 % en poids |
| (Méth)acrylate en C₃-C₆ | 0 - 100 % en poids |
| (Méth)acrylate à ≥C₇ | 0 - 50 % en poids |
| (Méth)acrylates polyvalents | 0 - 5 % en poids |
| Comonomères | 0 - 50 % en poids |
| Aromates vinyliques | 0 - 30 % en poids |
| Esters vinyliques | 0 - 30 % en poids |
par rapport au poids des composés vinyliques.

14. Corps en matière synthétique selon une ou plusieurs des revendications précédentes, **caractérisé en ce que** la teneur en carbone du revêtement inorganique (a) est au plus de 17 % en poids, par rapport au poids du revêtement (a).

15. Corps en matière synthétique selon une ou plusieurs des revendications précédentes, **caractérisé en ce que** le revêtement inorganique (a) peut être obtenu par le durcissement de solutions colloïdales de composés inorganiques et/ou organométalliques.

16. Corps en matière synthétique selon une ou plusieurs des revendications précédentes, **caractérisé en ce que** le revêtement inorganique (a) peut être obtenu par la condensation d'une composition qui comprend au moins 80 % en poids de trialkoxysilanes alkyles et/ou de tétra-alkoxysilanes, par rapport à la teneur en silanes condensables.

17. Corps en matière synthétique selon une ou plusieurs des revendications précédentes, **caractérisé en ce que** le revêtement inorganique (a) comprend des polysiloxanes condensables, qui présentent un poids moléculaire dans le domaine de 500 à 1500 g/mole.

18. Corps en matière synthétique selon une ou plusieurs des revendications précédentes, **caractérisé en ce que** l'épaisseur de couche des revêtements (a) et (b) se situe dans le domaine de 0,1 à 3 µm.

19. Corps en matière synthétique selon une ou plusieurs des revendications précédentes, **caractérisé en ce que** la résistance à l'abrasion du corps en matière synthétique, conformément à la norme DIN 53778, est d'au moins 10 000 cycles.

20. Corps en matière synthétique selon une ou plusieurs des revendications précédentes, **caractérisé en ce que** le corps en matière synthétique présente un module d'élasticité E, conformément à la norme ISO 527-2, d'au moins 1 500 MPa.

21. Corps en matière synthétique selon une ou plusieurs des revendications précédentes, **caractérisé en ce que** le corps en matière synthétique présente une résistance aux intempéries, conformément à la norme DIN 53 387, d'au moins 5 000 heures.

22. Corps en matière synthétique selon une ou plusieurs des revendications précédentes, **caractérisé en ce que** le corps en matière synthétique présente une transparence, conformément à la norme DIN 5033, d'au moins 70%.

23. Procédé en vue de la fabrication du corps en matière synthétique dispersant l'eau, conformément à une ou plusieurs des revendications 1 à 23, **caractérisé**
a) en ce qu'on applique un revêtement donnant de l'adhérence (b), comprenant deux polymères (A) et (B), et en ce qu'on le durcit, l'eau formant, sur une couche du polymère (A), un angle mouillant inférieur ou égal à 73° à la température de 20°C, et l'eau formant, sur une couche du polymère (B), un angle mouillant supérieur ou égal à 75° à la température de 20°C, et ensuite
b) en ce qu'on applique un revêtement inorganique dispersant l'eau (a) et en ce qu'on le durcit.
